# EUROPÄISCHE PATENTSCHRIFT

(11) **EP 1 521 054 B1**
(45) Veröffentlichungstag und Bekanntmachung des Hinweises auf die Patenterteilung: **08.09.2010**
(21) Anmeldenummer: 04016900.5
(22) Anmeldetag: 17.07.2004
(51) Int. Cl.: G01B 5/00, G01B 7/00, G01B 3/00

(54) **Vorrichtung zur Halterung von Karosserieteilen in einer Vermessungsposition**
Device for holding a car body part in a measuring position
Dispositif pour maintenir une pièce de carrosserie dans une position de mesure

(30) Priorität: 30.09.2003 DE 10345284
(43) Veröffentlichungstag der Anmeldung: 06.04.2005
(73) Patentinhaber: Junker & Partner GmbH, 66636 Tholey (DE)
(72) Erfinder: Junker, Franz-Rudolf, 66636 Tholey (DE); Huber, Alfred, 66571 Eppelborn (DE)
(74) Vertreter: Bernhardt, Winfrid

(56) Entgegenhaltungen:
- DE-A1- 3 121 579
- DE-A1- 19 921 340
- GB-A- 1 391 328
- US-A- 5 207 002

## Beschreibung

Die Erfindung betrifft eine Vorrichtung zur Halterung von Karosserieteilen in einer Vermessungsposition, mit einer Tragkonstruktion, an der Aufnahmesitze für das in der Vermessungsposition zu haltende Karosserieteil gebildet sind, und mit Zusatzeinrichtungen für den Ausbau der Halterungsvorrichtung zu einer Tastmesseinrichtungen umfassenden Messvorrichtung, wobei die Zusatzeinrichtungen (8a-10a) lösbar mit der Tragkonstruktion verbindbar sind.

Halterungsvorrichtungen solcher Art kommen im Fahrzeugbau z.B. im Rahmen der Karosserieentwicklung zum Einsatz. Durch die Aufnahmesitze der Tragkonstruktion lässt sich das Karosserieteil verformungsfrei in einer vorbestimmten Position halten, so dass es sich z.B. durch eine Koordinatenmessmaschine vermessen lässt.

Aus der DE 31 21 579 A1 geht eine in der Serienkontrolle von Fahrzeugkarosserien einsetzbare Messlehre hervor, die eine Hatterungsvorrichtung der eingangs erwähnten Art umfasst. Auf einem eine Karosserie in definierter Position aufnehmenden und halternden Messrahmen sind über Tragkonsolen mehrere Tastmesseinrichtungen befestigt, die mit ihrer Tastspitze jeweils einem Messpunkt zugeordnet sind. Die Tastspitze kann in eine Messstellung auf das Messobjekt zu bewegt und in eine Wartestellung zurückgezogen werden.

In der GB 1 391 328 A ist eine Vorrichtung zur Vermessung von Autokarosserien beschrieben, in der die Karosserie auf einer Grundplatte durch Träger und einen Pfosten gehalten wird. Die Vermessung der Karosserie erfolgt über Adapter, die mit der Karosserie und einem Messgerät in Kontakt gebracht werden und von der Messstelle bis zu einer für das Messgerät zugänglichen Stelle reichen.

Der Erfindung liegt die Aufgabe zugrunde, eine neue, variabler als solche Vorrichtungen nach dem Stand der Technik einsetzbare Vorrichtung zu schaffen.

Die Aufgabe wird durch eine Vorrichtung nach Anspruch 1 gelöst.

Durch die Zusatzeinrichtung zur Bildung der Lehre lässt sich ein Anschlag entsprechend einem weiteren, an das genannte Karosserieteil angrenzenden Karossemeteil einer Fahrzeug Karosserie herstellen, wobei dieser Lehrenanschlag insbesondere den angrenzenden Rand des weiteren Karossemeteils wenigstens teilweise nachbildet. Eine solche Lehre sichert während weiterer Entwicklungsphasen, dass sich geänderte Prototypkarosserieteile stets passgenau in die übrige karosserie einfügen.

Gegenstand der Erfindung ist demgemäss ein Baukastensystem, dessen Grundbestandteil die mit Aufnahmesitzen versehene, zur Montage von Zusatzeinrichtungen vorbereitete Tragkonstruktion ist. Vorteilhaft lässt sich so ein und dieselbe Tragkonstruktion von der Prototypphase an über die weitere Karosserieentwicklung bis hin zur Serienfertigung verwenden und den jeweiligen Anforderungen entsprechend aus- und umbauen. Entsprechend verringert sich der für die Bereitstellung von Messmitteln erforderliche Aufwand.

Bei dem zur Abtastung erforderlichen Bereich kann es sich insbesondere um den oberen Rand eines Karosserieteils handeln, das die Karosserie nach unten abschließt.

In weiterer vorteilhafter Ausgestaltung der Erfindung besteht die Tragkonstruktion aus miteinander verbundenen Profilen mit hinterschnittenen Nuten und die Zusatzeinrichtungen lassen sich an der Tragkonstruktion mit Hilfe in die Nuten eingreifender Nutensteine befestigen.

Vorzugsweise weisen die Zusatzeinrichtungen mit der Tragkonstruktion verbindbare Ausleger zum Halten des Anschlags oder der Tastmesseinrichtungen auf.

Insbesondere weisen die Tragkonstruktion und/oder die Zusatzeinrichtungen Passbohrungen oder/und Sitze zur passgenauen Montage der Zusatzeinrichtungen an der Tragkonstruktion auf. Durch diese Bohrungen lassen sich das Lehrenmaß genau reproduzieren und die Zusatzeinrichtungen mit geringem Montageaufwand an der Tragkonstruktion anbringen.

Bei den Tastmesseinrichtungen kann es sich um mechanische Messuhren oder/und elektrische Messtaster handeln.

Die Erfindung soll nun anhand eines Ausführungsbeispiels und der beiliegenden, sich auf dieses Ausführungsbeispiel beziehenden Zeichnungen näher erläutert werden. Es zeigen:

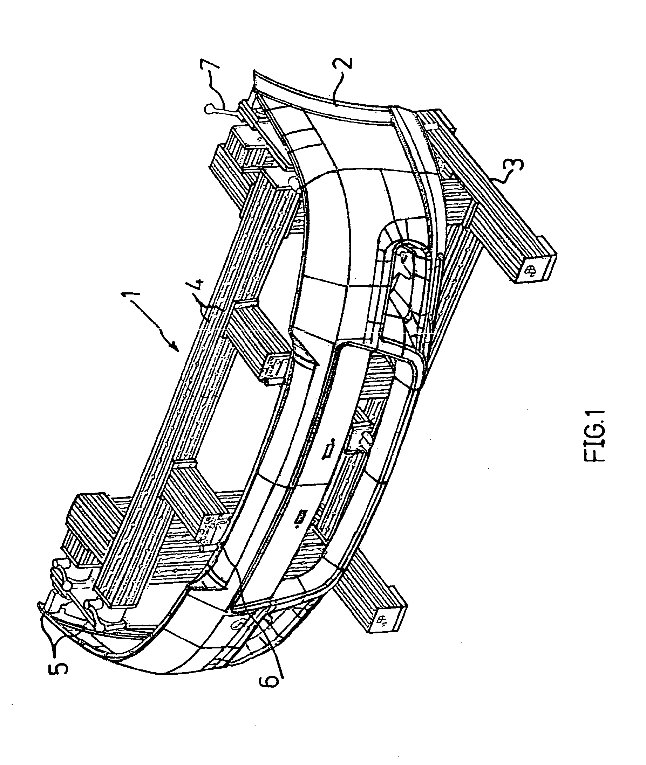

- Fig. 1: eine Vorrichtung ohne Zusatzeinrichtungen,
- Fig. 2: die Vorrichtung von Fig. 1 ausgebaut zu einer Lehre, und
- Fig. 3: die Vorrichtung von Fig. 1 ausgebaut zu einer Messvorrichtung.

Eine Tragkonstruktion 1 einer Haltevorrichtung für ein mit Hilfe einer Koordinatenmessmaschine auszumessendes Karosserieteil 2 besteht aus Aluminiumtragprofilen 3, die einen im Umriss quadratischen Querschnitt und an jeder der vier Seiten 2 hinterschnittene Nuten 4 aufweisen.

An der Tragkonstruktion 1 sind an verschiedenen Stellen, z.B. bei 5 und 6, das Karosserieteil aufnehmende Sitze gebildet, die so angeordnet sind, dass das Karosserieteil verformungsfrei durch die Vorrichtung gehalten wird. Die Position der Sitze lässt sich in begrenztem Umfang verstellen. Spannhebel 7 erlauben eine Arretierung eingestellter Positionen.

Das an der Tragkonstruktion 1 gehaltene Karosserieteil 2, das in dem hier beschriebenen Ausführungsbeispiel ein Frontteil eines Karosserie-Prototyps ist, lässt sich mit Hilfe einer Koordinatenmessmaschine vermessen.

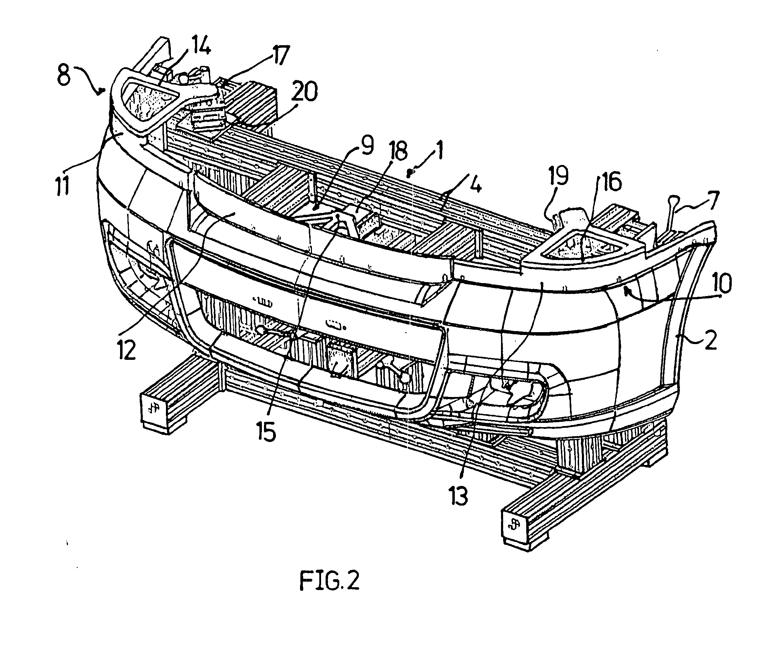

In einer in Fig. 2 gezeigten Ausbauvariante der Vorrichtung zu einer Lehre sind an der Tragkonstruktion 1 Zusatzeinrichtungen 8 bis 10 montiert, die jeweils einen Anschlag 11,12 bzw. 13 und einen mit dem Anschlag verbundenen Ausleger 14,15 bzw. 16 aufweisen. Die Ausleger 14 bis 16 sind an ihrem dem Anschlag abgewandten Ende mit der Tragkonstruktion 1 verbunden. Die Anschläge 11 bis 13 bilden den unteren Rand eines weiteren Karosserieteils nach, welches an den oberen Rand des Karosserieteils angrenzt und in welchem Fahrzeugscheinwerfer untergebracht sind.

Zur Befestigung der Zusatzeinrichtungen 8 bis 10 an der Tragkonstruktion dient jeweils ein Verbindungselement 17,18 bzw. 19, von denen jedes eine Grundplatte 20 aufweist, die mit in den Nuten 4 angeordneten Nutensteinen (nicht gezeigt) verschraubt ist.

Die Zusatzeinrichtungen lassen sich mit geringem Aufwand positionsgenau montieren. Hierzu sind (in den Figuren nicht sichtbare) Passstifte und Passbohrungen vorgesehen.

Die beschriebene Ausbauvariante lässt sich bei der weiteren Karosserieentwicklung einsetzen, während der es gewöhnlich zu Änderungen des Prototyp-Karosserieteils kommt. Die durch die Anschläge gebildete Lehre sichert die Einpassung geänderter Teile in die übrige Karosserie.

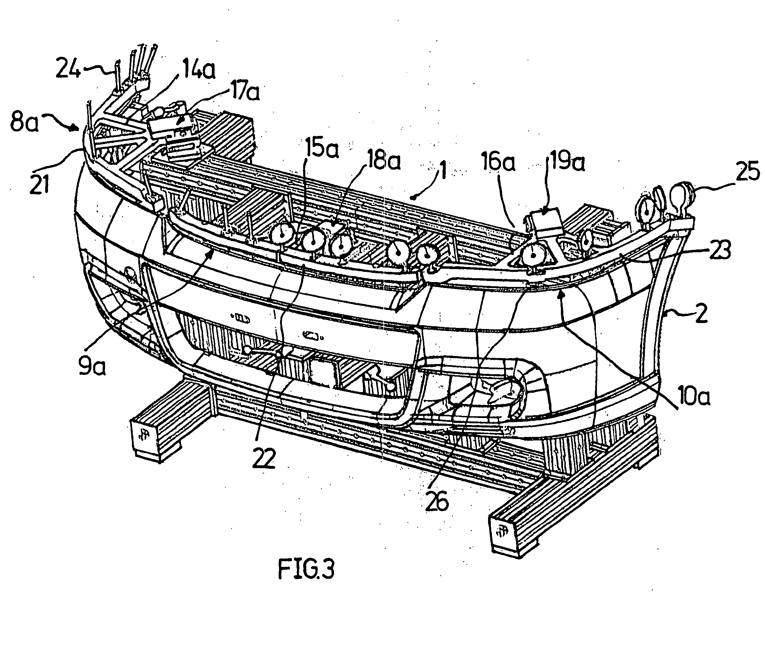

In der in Fig. 3 gezeigten Ausbauvariante, in der die Karosserieteilhalterung zu einer Messvorrichtung ausgebaut ist, sind an der Tragkonstruktion 1 Zusatzeinrichtungen 8a bis 10a in ähnlicher Weise wie bei der Ausbauvariante von Fig. 2 angebracht.

Die Zusatzeinrichtungen 8a bis 10a weisen jeweils einen Halter 21,22 bzw. 23 für Tastmesseinrichtungen auf, wobei der Halter über einen Ausleger 14a, 15a bzw. 16a und ein Verbindungselement 17a,18a bzw. 19a an der Tragkonstruktion 1 befestigt ist.

Beispielhaft sind als Tastmesseinrichtungen teilweise elektrische Messtaster 24 und mechanische Messuhren 25 gezeigt. Taststifte 26 der Messtaster 24 bzw. Messuhren 25 berühren den oberen Rand des Karosserieteils 2, welcher in der Ausbauvariante als Lehre gemäß Fig. 2 zur Anlage gegen die Anschläge 11,12 und 13 kommt.

Die in Fig. 3 beschriebene Ausbauvariante lässt sich in der Fertigung zur Serienkontrolle des Karosserieteils einsetzen. Vorteilhaft lässt sich somit ein und dieselbe Vorrichtung von der Prototypphase der Entwicklung an verwenden und schließlich als Serienkontrollvorrichtung in die Fertigung überführen.

## Patentansprüche

1. Vorrichtung zur Halterung von Karosserieteilen (2) in einer Vermessungsposition, mit einer Tragkonstruktion (1), an der Aufnahmesitze (5,6) für das in der Vermessungsposition zu haltende Karosserieteil (2) gebildet sind, und
mit Zusatzeinrichtungen (8a-10a) für den Ausbau der Halterungsvorrichtung zu einer Tastmesseinrichtungen (24,25) umfassenden Messvorrichtung, wobei,
die Zusatzeinrichtungen (8a-10a) lösbar mit der Tragkonstruktion verbindbar sind, **dadurch gekennzeichnet dass** die Vorrichtung anstelle der genannten Zusatzeinrichtungen (8a-10a) mit der Tragkonstruktion (1) lösbar verbindbare weitere Zusatzeinrichtungen (8-10) für den Ausbau der Halterungseinrichtung zu einer Lehre mit einem Anschlag (11-13) aufweist, wobei der Anschlag zur Anlage gegen einen durch die Tastmesseinrichtungen (24,25)der Messlehre abgetasteten Bereich des Karosserieteils (2) vorgesehen ist und einen an das Karosserieteil (2) angrenzenden Rand eines weiteren Teils der Fahrzeugkarosserie wenigstens teilweise nachbildet.

2. Vorrichtung nach Anspruch 1,
**dadurch gekennzeichnet,**
**dass** der zur Abtastung vorgesehene Bereich den oberen Rand des Karosserieteils (2) umfasst.

3. Vorrichtung nach Anspruch 1 oder 2,
**dadurch gekennzeichnet,**
**dass** die Tragkonstruktion (1) miteinander verbundene Profile (2) mit hinterschnittenen Längsnuten (4) umfasst und die Zusatzeinrichtungen (8-10; 8a-10a) sich an der Tragkonstruktion (1) mit Hilfe in die Nuten (4) eingreifender Nutensteine befestigen lassen.

4. Vorrichtung nach einem der Ansprüche 1 bis 3,
**dadurch gekennzeichnet,**
**dass** die Zusatzeinrichtungen (8-10; 8a-00a) mit der Tragkonstruktion (1) verbindbare Ausleger (14-16) zum Halten des Anschlags (11-13) oder der Tastmesseinrichtungen (24,25) umfassen.

5. Vorrichtung nach einem der Ansprüche 1 bis 4,
**dadurch gekennzeichnet,**
**dass** als Tastmesseinrichtungen mechanische Messuhren (25) und/oder elektrische Messtaster (24) vorgesehen sind.

## Claims

1. Apparatus for holding car body parts (2) in a measuring position, with a supporting structure (1) on which receiving seats (5, 6) for the car body part (2) which is to be held in the measuring position are formed, and with additional devices (8a-10a) for the removal of the holding apparatus to a measuring device comprising probe-type measuring devices (24, 25), wherein the additional devices (8a-10a) can be connected releasably to the supporting structure, **characterized in that**, instead of the abovementioned additional devices (8a-10a), the apparatus has further additional devices (8-10) which can be connected releasably to the supporting structure (1) and are intended for the removal of the holding device to a gauge with a stop (11-13), the stop being provided for bearing against a region of the car body part (2) scanned by the probe-type measuring devices (24, 25) of the measuring gauge and at least partially simulating an edge, which is adjacent to the car body part (2), of a further part of the car body.

2. Apparatus according to claim 1, **characterized in that** the region provided for scanning comprises the upper edge of the car body part (2).

3. Apparatus according to claim 1 or 2, **characterized in that** the supporting structure (1) comprises interconnected profiles (2) having undercut longitudinal grooves (4), and the additional devices (8-10; 8a-10a) can be fastened to the supporting structure (1) with the aid of slide blocks engaging in the grooves (4).

4. Apparatus according to one of claims 1 to 3, **characterized in that** the additional devices (8-10; 8a-10a) comprise extension arms (14-16) which can be connected to the supporting structure (1) and are intended for holding the stop (11-13) or the probe-type measuring devices (24, 25).

5. Apparatus according to one of claims 1 to 4, **characterized in that** mechanical dial indicators (25) and/or electric measuring sensors (24) are provided as the probe-type measuring devices.

## Revendications

1. Dispositif pour maintenir des pièces de carrosserie (2) dans une position de mesure, comprenant une structure portante (1) sur laquelle sont formés des sièges récepteurs (5, 6) pour la pièce de carrosserie (2) qu'il s'agit de maintenir dans la position de mesure, et comprenant des moyens supplémentaires (8a-10a) pour compléter le dispositif de maintien en un dispositif de mesure qui comprend des systèmes de mesure à palpeurs (24, 25), dans lequel
les moyens supplémentaires (8a-10a) sont susceptibles d'être reliés de façon détachable à la structure portante,
**caractérisé en ce que**
le dispositif comprend, au lieu des moyens supplémentaires précités (8a-10a), d'autres moyens supplémentaires (8-10) susceptibles d'être reliés de façon détachable à la construction portante pour compléter le dispositif de maintien en un gabarit avec une butée (11-13), dans lequel la butée est prévue pour venir en contact contre une région de la pièce de carrosserie (2) palpée par les systèmes de mesure à palpeurs (24, 25) du gabarit de mesure, et reproduit au moins partiellement une bordure, adjacente à la pièce de carrosserie (2), d'une autre pièce de la carrosserie de véhicule.

2. Dispositif selon la revendication 1,
**caractérisé en ce que** la zone prévue pour être palpée comprend la bordure supérieure de la pièce de carrosserie (2).

3. Dispositif selon la revendication 1 ou 2,
**caractérisé en ce que** la structure portante (1) comprend des profilés (2) reliés les uns aux autres avec des gorges longitudinales (4) en contre-dépouille, et les moyens supplémentaires (8-10 ; 8a-10a) peuvent être fixés sur la structure portante (1) à l'aide de coulisseaux qui s'engagent dans les gorges (4).

4. Dispositif selon l'une des revendications 1 à 3,
**caractérisé en ce que** les moyens supplémentaires (8-10 ; 8a-10a) comprennent des bras (14-16) susceptibles d'être reliés à la structure portante (1) pour tenir la butée (11-13) ou les systèmes de mesure à palpeurs (24, 25).

5. Dispositif selon l'une des revendications 1 à 4,
**caractérisé en ce que** l'on prévoit à titre de systèmes de mesure à palpeurs des comparateurs de mesure mécaniques (25) et/ou des palpeurs de mesure électriques (24).
